# EUROPEAN PATENT APPLICATION

(11) **EP 0 556 506 A1**
(43) Date of publication of application: **25.08.1993**
(21) Application number: 92308540.1
(22) Date of filing: 18.09.1992
(51) Int. Cl.: B01D 29/07, B01D 29/58

(54) **Modular filter system**

(30) Priority: 19.02.1992 US 837139
(71) Applicant: Broom, Gilbert, Schereville, Indiana 46375 (US)
(72) Inventor: Broom, Gilbert, Schereville, Indiana 46375 (US)
(74) Representative: Allman, Peter John

(57) **Abstract**

The filter cartridges consist of tightly wrapped paper filter media retained in a plastic casing. The plastic casing has a grate-like configuration on its top and bottom surfaces to allow fluid to enter and exit the filter. The casing is also dimensioned to closely surround the paper filter media. The filter cartridges are stackable such that the canister can retain a plurality of cartridges thereby to increase the capacity of the filter. Finally, the filter system is designed such that access to and removal and replacement of the cartridges is very simple.

## Description

### Background Of The Invention

This invention relates, generally, to filters and, more particularly, to an improved modular filtering system.

Filters are used in a wide variety of applications such as to filter fuel and oil in devices like internal combustion engines. The known filters typically consist of a canister supporting and enclosing a filter medium such as paper or charcoal. As the fluid passes through the filter medium contaminants and other particulates are removed from the fluid by the filtering medium.

An example of one such filter is shown in U.S. Patent No. 2,197,252 to Decker. Decker shows a can fitted into a cylindrical case where the can is filled with filter media such as oakum cord, pulp ash and charcoal, and asbestos. An example of a filter that uses paper as the filter medium is U.S. Patent No. 2,738,879 to Frantz. The Frantz device consists of a roll of toilet tissue supported in a casing. The casing is, in turn, supported in a shell. The roll of tissue is intended to be removed from the casing and be replaced. U.S. Patent No. 3,308,956 to Yee et al. discloses a bypass filter for an engine that also uses a paper roll retained in a container assembly.

The aforementioned patents illustrate some of the problems of the existing filters. For example, the paper rolls of Yee and Frantz are very difficult to remove from their respective containers because the paper tends to adhere to the inside surface of their respective enclosures. Moreover, the complicated methods of securing the filter media in the container assemblies makes the task of replacing the filter media difficult. The filter media of Decker is also difficult and expensive to replace because of its particulate nature.

Moreover, the known filters have a tendency to channel, that is, the fluid being filtered creates relatively large passages through the filter media where most of the fluid travels. As a result, a large portion of the filter medium is not used and the fluid is not properly filtered. The known filters also do not provide a system where the fluid capacity of the filter system can be easily increased or decreased. Thus, an improved filter system is desired.

### Summary Of the Invention

The filter system of the invention overcomes the above-noted shortcomings and consists of a canister that contains one or more filter cartridges. The filter cartridges consist of tightly wrapped paper filter media retained in a plastic casing. The plastic casing has a grate-like configuration on its top and bottom surfaces to allow fluid to enter and exit the filter. The casing is also dimensioned to closely surround the paper filter media. As a result, fluid passing through the filter media does not channel such that the entire paper roll is used for filtering and filtering is enhanced. The filter cartridges are stackable such that the cartridges can be placed in series thereby to increase the capacity of the filter system. Finally, the filter system is designed such that access to and removal and replacement of the cartridges is very simple.

### Brief Description Of The Drawings

Figure 1 is a section view of the filter system of the invention.

Figure 2 is a view of the top and bottom surfaces of the filter cartridge of the invention.

Figure 3 is a detailed view of the filter cartridge.

Figure 4 is an enlarged view of the area of contact between adjacent filter cartridges.

Figure 5 is an exploded view of the filter system of the invention.

### Detailed Description Of The Invention

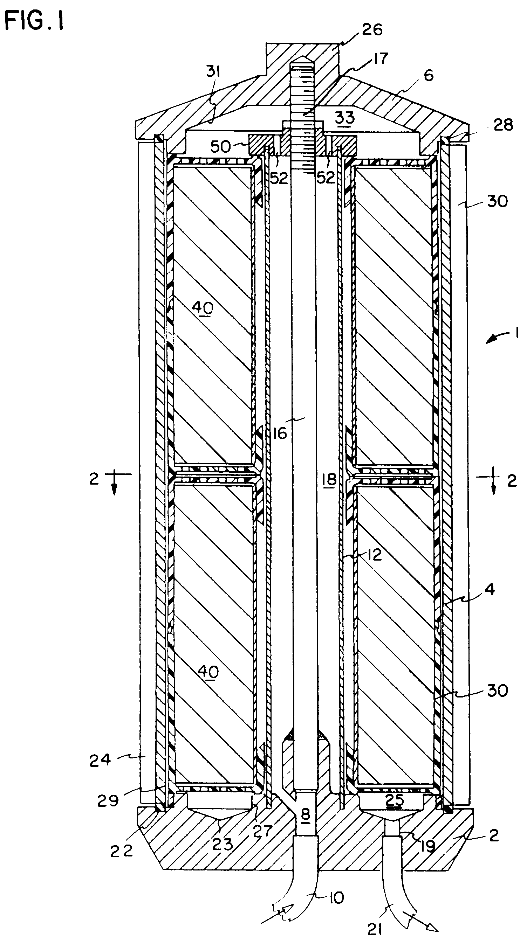

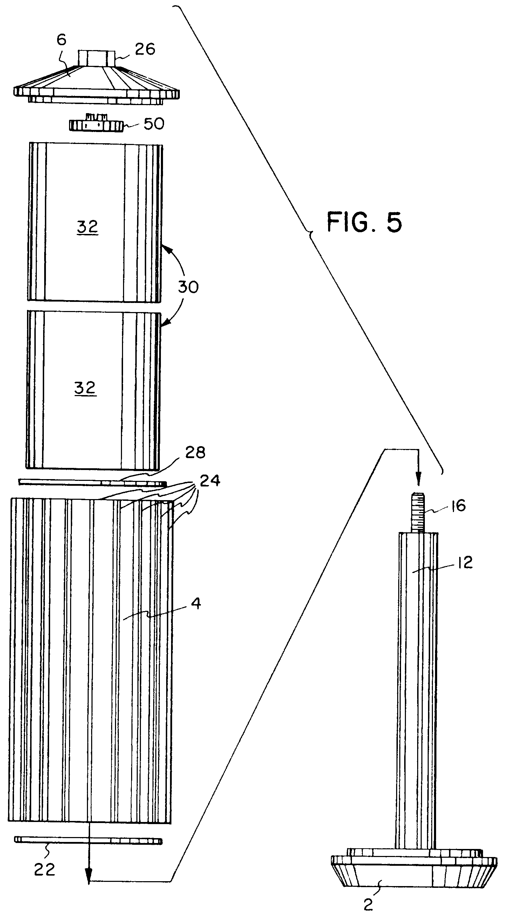

Referring more particularly to Figures 1 and 5, the filter system of the invention includes a canister 1 consisting of a base 2, a sleeve 4 and a cap 6. Base 2 includes a centrally located bore 8 releasably connected to a fluid inflow line 10. A cylindrical conduit 12 is fixed to base 2 by any suitable method so as to surround inlet bore 8 and provide a fluid-tight seal therebetween. A connecting rod 16 having screwheads 17 formed at its distal end is fixed to base 2 inside of and concentric with conduit 12. Fluid entering bore 8 will, therefore, be conveyed through the passage 18 created between conduit 12 and rod 16. An outflow port 19 is also provided in base 2 and is removably connected to line 21 to return the filtered fluid back to its source.

The base further includes an annular depression 23 that forms a well 25 in communication with the outlet port 19 and the bottom of the lowermost filter cartridge 30. The sides of depression 23 form annular seal rings 27 and 29 that engage cartridges 30 to form a liquid-tight seal therebetween defining the path of travel for the fluid being filtered.

Sleeve 4 has a cylindrical shape and sits on base 2 to create an annular chamber 20 between it and conduit 12 for receiving filter cartridges 30. A compliant seal ring 22 is provided in base 2 to create a fluid-tight seal between sleeve 4 and base 2. Sleeve 4 is also provided with radially extending cooling fins 24 that increase the heat transfer between the fluid being filtered and the ambient environment to thereby facilitate the cooling of the fluid.

Completing the canister 1 is cap 6 that screwthreadably engages connecting rod 16 such that when cap 6 is tightened on rod 16, cap 6, sleeve 4 and base 2 are tightly fit together. Cap 6 is provided with an integral hex head 26 that can be engaged by any suitable tool to tighten and loosen cap 6 on connector 16. Cap 6 includes a depression 31 that forms a well 33 in communication with the top of the uppermost filter cartridge 30. Cap 6 also includes an integral annular seal 35 that engages the uppermost filter cartridge 30 to create a liquid-tight seal therebetween defining a path of travel for the fluid being filtered. Finally, a compliant seal ring 28 is provided on cap 6 to create a fluid-tight seal between cap 6 and sleeve 4. As will be apparent from the foregoing description, the housing can be quickly and easily disassembled by unscrewing cap 6 from rod 16 and removing sleeve 4 from base 2 allowing complete access to filter cartridges 30.

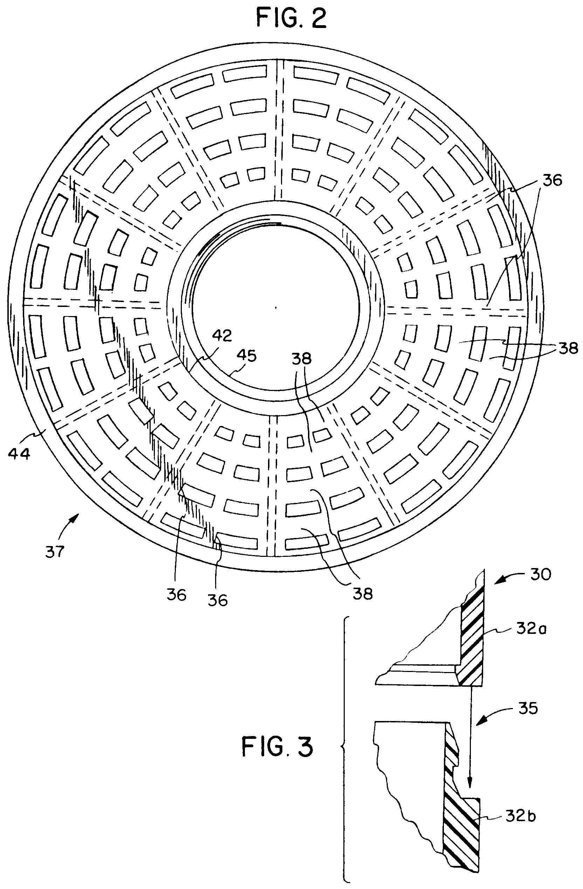

The filter cartridges 30 of the invention will now be described with particular reference to Figures 1 through 4. Each of cartridges 30 are identical and consist of a two-piece plastic housing 32 having a solid outer wall 34. The top section 32a and bottom section 32b of housing 32 can be snap fit together by the interlocking arrangement 35 shown in Figure 3 or secured by some other method such as sonic welding.

The top and bottom of cartridge 30 are formed as a grate 37 having radially extending members 36 crossed by concentric, annular members 38 as best shown in Figure 2. A centrally located aperture 45 is formed in the top and bottom of grate 37 to receive conduit 12 when cartridge 30 is installed in canister 1. Housing 32 is dimensioned to provide a snug fit with paper roll 40 such that the housing helps to prevent the layers of the paper roll from separating. Because the grate spreads the fluid over the entire surface of the paper roll, the outer wall 32 tightly engages roll 40 and the paper roll has a unique construction, as will hereinafter be described, the fluid being filtered will not channel through the paper roll.

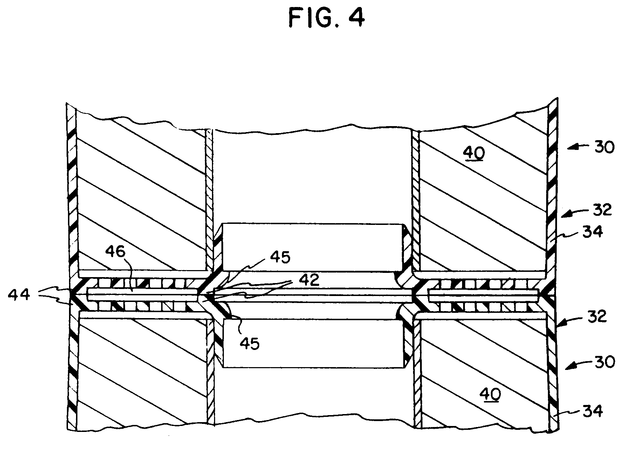

The top and bottom walls also include integrally formed annular seals 42 and 44 consisting of projections extending from the peripheries of the aperture 45 and cartridge housing 32, respectively. These seals engage seals 27 and 29 formed on the base 2 and seal 35 formed on cap 6 as best shown in Figure 1. Moreover, seals 42 and 44 engage the like seals of adjacent cartridges to form a fluid-tight seal therebetween as best shown in Figure 4. The engagement of the seals of adjacent cartridges forms an annular well 46 between the adjacent cartridges. Thus, the fluid will flow into and out of the filter cartridges via wells 25, 33 and 46 also preventing the undesirable channeling of the fluid. Moreover, because grates 37 of the adjacent cartridges will not be perfectly aligned, the fluid flowing between cartridges must flow at angles relative to the direction of flow through the filter media creating turbulence in well 46 also helping to prevent channeling.

Referring to Figures 1 and 5, a spray head 50 screwthreadably engages post 16. Head 50 is tightened against seal 42 of the uppermost cartridge to force the seals of adjacent cartridges tightly into engagement with one another and with the base 2. Head 50 is provided with apertures 52 to distribute the fluid being conveyed in passage 18 evenly over the top of the uppermost filter cartridge 30.

The housing 32 surrounds and retains a paper roll 40 to prevent channeling and provide a path of travel for the fluid. The housing 30 also greatly enhances the ease with which the cartridges can be removed and replaced. The entire cartridge can be removed and disposed of. The two-piece snap together construction, shown in Figure 3, greatly facilitates assembly of the housing and inspection of the paper roll. Moreover, because the housing is preferably made of plastic it will deform and discolor should the temperature of the fluid being filtered rise above a predetermined value. Thus, the plastic housing can act as a visual indicator of the overheating of the fluid.

The paper roll 40 of the invention consists of a roll of non-perforated, 9.5 weight, 2-ply, grade 20 tissue with a cardboard core. In a preferred embodiment the roll has a diameter of between 3.0 and 4.0 inches with a total weight of between 6 and 7 ounces. It will be understood that the size of the paper roll used will depend on the desired size of the filter unit and that the weight will vary accordingly. The paper roll of the invention is significantly denser than a typical roll of toilet tissue and provides greatly enhanced filtering capabilities with virtually no channeling.

In operation, the sleeve 4 is set on base 2 and the filter cartridges 30 are stacked in the chamber created between sleeve 4 and conduit 12. While in the illustrated embodiment two cartridges are shown, it is to be understood that one or more cartridges can be used depending on the required capacity. Of course, the length of sleeve 4, rod 16 and conduit 12 are shortened or lengthened to accommodate the number of filter cartridges to be used.

Once the cartridges 30 are in place, spray head 50 is screwed on post 16 in contact with the uppermost cartridge. Cap 6 is then screwed into post 16 to complete the assembly. Fluid is introduced to filter assembly 1 via bore 8. For fluid to flow through the filter a preferred pressure drop across the filter of at least 20 inches of mercury should be created.

The fluid under pressure will travel up passage 18 through spray head 50 and will be spread evenly over the top of the uppermost cartridge filling well 33. The grate 37 will spread the fluid evenly over the paper roll and the fluid will be forced through the paper rolls into wells 46 and 25 and out port 19.

The filter system of the invention can be used with any fluid and is particularly useful in filtering oil and gas, propane, other fuels, antifreeze and other solutions. The input and output ports can be connected to any source of fluid under pressure such that the filter can operate as a by-pass filter in an engine, either vehicle mounted or stationary. The filter system can also be used with a separate pump to clean fluids such as antifreeze such that the fluid can be recycled.

While the invention has been described in detail with specific reference to the figures, it will be appreciated that numerous changes in the details and construction of the device can be made without departing from the spirit and scope of the invention.

## Claims

1. A filter apparatus, comprising:
a) a canister consisting of a sleeve, a base mounted to one end of the sleeve, a cap mounted to the opposite end of the sleeve and means for securing said cap to said base to create a liquid-tight seal between the base, the sleeve and the cap;
b) means for delivering fluid into and out of the canister; and
c) a removable filter cartridge disposed in said canister having a filter medium disposed therein, said cartridge including means for allowing fluid to flow into the cartridge at one end thereof and out of the cartridge at the other end thereof, said cartridge including means for forming a liquid-tight seal surrounding the ends of said cartridge.

2. The filter apparatus according to claim 1, wherein the filter media includes a paper roll.

3. The filter apparatus according to claim 2, wherein said paper roll has a weight of between six and seven ounces and a diameter between three and four inches.

4. The filter apparatus according to claim 2, wherein said paper roll is 9.5 weight paper.

5. The filter apparatus according to claim 1, wherein said means for allowing fluid to flow consists of a grate means formed on both ends of said cartridge creating turbulence in the fluid.

6. A filter apparatus, comprising:
a) a canister consisting of a sleeve, a base mounted on one end of the sleeve, a cap mounted to the opposite end of the sleeve and means for securing said cap to said base to create a fluid-tight seal between the base, the sleeve and the cap;
b) an inlet port and an outlet port on said canister to allow fluid to enter and exit the canister;
c) a plurality of filter cartridges disposed in the canister each having a filter medium disposed therein, said cartridges including means for allowing fluid to flow through each of said filter media and means for forming liquid tight seals between said base, said cap and each filter cartridge such that fluid wells are created adjacent said means for allowing fluid to flow.

7. The filter apparatus according to claim 6, wherein the filter media includes a paper roll.

8. The filter apparatus according to claim 7, wherein said paper roll has a weight of between 6 and 7 ounces and a diameter between three and four inches.

9. The filter apparatus according to claim 7, wherein said paper roll is 9.5 weight paper.

10. The filter apparatus according to claim 6, wherein said means for allowing fluid to flow consists of a grate means formed on opposite sides of said cartridges, the grate means of adjacent cartridges causing the fluid to flow in various directions.

11. A filter apparatus, comprising:
a) a canister consisting of a sleeve, a base mounted to one end of the sleeve, a cap mounted to the opposite end of the sleeve and means for securing said cap to said base to create a fluid-tight seal between the base, the sleeve and the cap;
b) an inlet port and an outlet port on said canister to allow fluid to enter and exit the canister;
c) a plurality of filter cartridges disposed in the canister each having a filter medium disposed therein, said cartridges including means for allowing fluid to flow through each of said filter media formed on opposite ends of the cartridge, said cartridges also including annular projections extending beyond the ends of the cartridges at the periphery thereof to sealingly engage said base, said cap and the annular projection of adjacent cartridge such that fluid wells are created adjacent said means for allowing fluid to flow whereby channeling of the fluid is prevented.
